# Europäisches Patentamt
## European Patent Office
### Office européen des brevets

(19)

(11) Veröffentlichungsnummer: **0 100 980**
**B1**

(12) **EUROPÄISCHE PATENTSCHRIFT**

(45) Veröffentlichungstag der Patentschrift:
**30.03.88**

(51) Int. Cl.⁴: **B 05 B 15/12,** B 05 B 15/04,
B 01 D 46/26

(21) Anmeldenummer: **83107525.4**

(22) Anmeldetag: **30.07.83**

(54) **Pulversprühkabine.**

(30) Priorität: **10.08.82 DE 3229717**

(43) Veröffentlichungstag der Anmeldung:
**22.02.84 Patentblatt 84/8**

(45) Bekanntmachung des Hinweises auf die Patenterteilung:
**30.03.88 Patentblatt 88/13**

(84) Benannte Vertragsstaaten:
**AT BE CH DE FR GB IT LI NL SE**

(56) Entgegenhaltungen:
**DE - A - 476 762**
**DE - A - 2 731 123**
**FR - A - 2 123 936**
**FR - A - 2 300 625**
**FR - A - 2 325 415**
**FR - A - 2 369 878**
**GB - A - 677 074**
**US - A - 3 936 902**

(73) Patentinhaber: **ESB ELEKTROSTATISCHE SPRÜH- UND BESCHICHTUNGSANLAGEN G.F. VÖHRINGER GMBH, Dr. Zimmermann-Strasse 18, D-7758 Meersburg (DE)**

(72) Erfinder: **Vöhringer, Gerhard Friedrich, Mainauweg 8, D-7990 Friedrichshafen (DE)**

(74) Vertreter: **Braito, Herbert, Dipl.-Ing., Postfach 1140 Martin-Luther-Strasse 1, D-7950 Biberach/Riss 1 (DE)**

ACTORUM AG

## Beschreibung

Die Erfindung betrifft eine Pulversprühkabine zum Beschichten der Oberfläche von in einem Beschichtungsraum befindlichen Werkstücken, mit wenigstens einer Einsprühöffnung und einer sich an eine Begrenzungsfläche des Beschichtungsraumes anfügenden Filtervorrichtung mit einem zentrisch zu einer Drehachse angeordneten Filterträger für ein auswechselbar an dessen gasdurchlässigem Mantelteil anzubringendes Filterelement, mit einer Abreinigungsvorrichtung, die eine gegen die Haupt-Saugrichtung auf die Wandung des Filterelementes gerichtete Abreinigungs-Blasdüse aufweist, und mit einer Antriebsvorrichtung für einen Relativ-Drehantrieb von Abreinigungsdüse und Filterträger um dessen Achse, wobei der Filterträger von einer Öffnung in einer rückseitigen Trennwand abdichtend zum Beschichtungsraum hin frei vorragt und auf seinem gasdurchlässigen Mantel zwischen gasundurchlässigen Endteilen das Filterelement mittels zweier Stirnelemente abdichtend und in den Beschichtungsraum hinein abziehbar angeordnet ist (DE-A-2 731 123).

Ein wesentlicher Aspekt bei der Beurteilung von Pulversprühkabinen liegt in den Rüstzeiten zum Umstellen beim Farbwechsel. Hier ist die Entwicklung zunächst dahin gegangen, das Filteraggregat mit mehreren Filterelementen und allen anderen den Pulverkreislauf beeinflussenden Teilen an einer geschlossenen Pulvereinheit anzubringen, die beim Farbwechsel als Ganzes ausgetauscht wird (DE-A 2 835 474). Dies mag noch angehen, wenn nur etwa drei Farbtöne in Betracht kommen. Da jedoch in aller Regel die Anzahl der bereitzuhaltenden Farben vielfach grösser ist, erfordert ein Austausch der ganzen Pulvereinheit unverhältnismässig grosse Investitionen. Auch wenn das Prinzip des Wechsels der Pulvereinheiten beibehalten wird, ist es daher notwendig, die einzelnen Filterelemente der Farbtoneinheiten zwischenzeitig herauszunehmen und für einen Wiedereinsatz mit einer anderen Pulverfarbe zu reinigen. Dies hat letztlich zu der Überlegung geführt, auf den Austausch von Pulvereinheiten ganz zu verzichten und nach Bedarf jeweils die Filterelemente zu reinigen.

Nun ist mit gleichen Filterelementen nicht schlechthin der Einsatz aller Farben möglich, sondern man kann mit der bisherigen Reinigungstechnik die Filter immer nur für eng verwandte Farbtöne einsetzen, da sonst einzelne Pulverpartikel schon eine Störung der Beschichtung bewirken können. Zum anderen ist es verhältnismässig zeitaufwendig, die etwa zehn Filterelemente eines Filteraggregates einzeln auszuwechseln.

Dies gilt im wesentlichen auch für die durch die DE-A-2 731 123 bekannte Sprühkabine, die einen zu einer lotrechten Drehachse ortsfest angeordneten Filterträger mit einem in Umfangsrichtung zick-zack-förmig gefalteten Filterelement zeigt, das an beiden Enden luftdicht am Filterträger gehalten wird und von diesem weg in den Filterraum hinein abziehbar ist. In der Filterhülse ist dabei exzentrisch und parallel zur Drehachse und um diese drehbar ein Düsenrohr mit schräg zur Umlaufrichtung geneigten Düsenöffnungen angeordnet. Durch den Rückstoss der Blasluft wird das Düsenrohr in Umlauf versetzt, wobei die einzelnen durch die Faltung gebildeten Filtertaschen aufeinanderfolgend kurzzeitig unter Druck gesetzt und die auf der Aussenseite der Filterhülse anhaftenden Pulverpartikel durch schlagartiges Verformen des Filtermaterials abgesprengt werden.

Zwar kann das Pulvermaterial am ganzen Umfang herabfallen und einer Weiterverwertung zugeführt werden. Es hat sich jedoch gezeigt, dass die Reinigungsintensität begrenzt ist, zumal der Druckluftstrahl auch die Energie für die Drehbewegung aufzubringen hat und daher ein Filterelement nur für Sprühpulver mit eng benachbarten Farbtönen verwendet werden kann. Es ist in der Regel beim Farbwechsel herauszunehmen und muss dann einer Grundreinigung in einer ausserhalb der Sprühkabine angeordneten Vorrichtung unterzogen werden.

Die Erfindung geht aus von der eingangs geschilderten Pulversprühkabine und verfolgt die Aufgabe, diese Sprühkabine so zu gestalten, dass sie auch bei einer grossen Anzahl Farbtöne mit geringem technischen Aufwand in kurzer Zeit gereinigt bzw. zum Farbwechsel umgerüstet werden kann.

Zur Lösung dieser Aufgabe wird erfindungsgemäss der Filterträger um die etwa zur Mitte des Beschichtungsraumes hin gerichtete Achse drehbar gelagert, die Abreinigungsvorrichtung an der unteren Mantellinie des Filterelementes angeordnet und die Blasdüse nach unten gerichtet. Ferner werden der Blasdüse wenigstens innerhalb des Filterelementes angebrachte Leitbleche zum injektorartigen Erzeugen einer Sekundärströmung zugeordnet.

Hier wird die Abreinigungsvorrichtung nahezu ausschliesslich aus feststehenden Teilen gebildet, was der Betriebssicherheit, der Zuverlässigkeit und leichteren Wartung zugute kommt. Der drehbare Teil dient dagegen nahezu ausschliesslich zur Halterung einer Filterhülse, die als gegebenenfalls einziges Filterelement grossflächig ausgebildet sein kann und durch exakte Relativführung zur Blasdüse eine verbesserte Abreinigung und zudem einen leichteren und schnelleren Filterwechsel ermöglicht. Durch die Abreinigung am jeweils unteren Rand des Filterelementes fallen die abgelösten Pulverpartikel unmittelbar vom Filterelement ab, können sich also kaum nochmals ansetzen. Der Austausch des Filterelementes kann ebenso wie die Reinigung der anderen pulverführenden Flächen ausschliesslich vom Innenraum der Kabine her erfolgen, so dass alle diese Vorgänge grundsätzlich von einer Person ohne sonderlichen Zeitaufwand zu bewerkstelligen sind. Vor allem aber wird durch der Blasdüse zugeordnete Leitbleche injektorartig eine Sekundärströmung erzeugt, durch die sich die Abreinigungswirkung bei gegebenem Primärgasstrom vervielfältigen lässt. Damit wird eine Abreinigungswirkung erzielt, wie sie meist nur bei stationären Spezialanlagen erreicht werden konnte. Man benötigt für jeden Farbton im Prinzip nur ein einziges Filterelement, kann also mit geringen Investitionskosten eine ganze Palette Farbtöne im Sprühprogramm halten. Da auch die Halterung des Filterelementes während der Abreinigung keine Änderung erfährt, lässt sich die Standzeit des Filters zwischen Auswechselvorgängen erheblich steigern. Grundsätzlich wird es auch ermöglicht, zwischen einzelnen Abreinigungsvorgängen unterschiedliche, insbesondere benachbarte Farbtöne einzusetzen, ohne dass das Filterelement selbst ausgetauscht werden muss.

Vor allem dann, wenn in der herkömmlichen Weise Einsprühöffnung und Filtervorrichtung gegenüberliegend angeordnet sind, wird das Pulver jeweils an der unteren Mantellinie abgelöst, wo seine Haftkräfte wegen der nach aussen wirkenden Schwerkraft wesentlich gemindert sind. Durch diese Anordnung wird auch eine Vergleichmässigung des Sprühvorganges bewirkt, da vom ganzen Trommelumfang her eingesaugt werden kann, also die Luftströmung weitgehend horizontal zwischen Einsprühöffnung und Filterelement verläuft. Dies aber bietet die Gewähr dafür, dass bis zum Werkstück auch die Pulverstrahlen einigermassen gleichmässig auf die Querschnittsfläche verteilt bleiben.

Auf anderen Fachgebieten, beispielsweise in der Textiltechnik, sind um eine meist waagerechte Achse drehbare Siebtrommeln mit einer längs einer Mantellinie vorgesehenen Abreinigungsvorrichtung zum Ausblasen oder Absaugen des Siebmantels an sich bekannt (DE-U-1 890 422 und CH-A-55 489). Dabei ist auch die Trommel seitlich an eine Öffnung in einer zwischen Reingasraum und Rohgasraum eingezogenen Zwischenwand angeordnet, und schliesslich ist es durch die US-A-1 649 220 für Staubabscheider auch bekannt, den Umfang der Siebtrommel mit einer Filterbahn zu bespannen. Dies erfordert jedoch einen grösseren Umfangsraum zur Filtertrommel und umständliche Manipulation zum Filterwechsel, für welche die verfügbare Rüstzeit beim Farbwechsel in Pulverbeschichtungsanlagen nicht ausreicht.

Eine Ausführung mit waagerechter Filterachse und um diese drehbar gelagertem Filterelement zeigt die GB-A-677 074, wobei ein als Abreinigungselement dienender Walzenkörper mit einer innen angeordneten Blasdüse im Bereich einer unteren Mantellinie des im wesentlichen zylindrischen Filterelementes angeordnet ist. Auch dadurch wird eine kontinuierliche Ablösung der schon angesetzten Festkörperteilchen ermöglicht. Eine Anwendung dieser bekannten Vorrichtungen auf dem Gebiet der Pulverbeschichtung von Werkstücken ist jedoch nicht ohne weiteres möglich. Insbesondere wird auch dort ausschliesslich mit einem Primärluftstrom gearbeitet, was nur begrenzte Abreinigungsleistung ermöglicht.

Zu einer weiteren Steigerung der Reinigungswirkung unter verbesserter Ablösung des an der Aussenfläche des Filterelementes anhaftenden Sprühpulvers dienen auch ausserhalb des Filterelementes mindestens auf zwei Längsseiten der Blasstrahlebene angebrachte Leitbleche, welche die abgelösten Pulverpartikel aus dem Ansaugbereich des Filterelementes herausführen. Es wird auch die Abreinigungswirkung durch die Wahl des geeigneten Filtermaterials verbessert. So sind dünne Oberflächenfilter wie Papierfilter besser geeignet als Filzfilter oder Gewebefilter. Durch örtlich plötzliches Beaufschlagen des Filtermaterials werden vor allem Oberflächenfilter stärker verformt, wenn der Blasstrahl von einer Filterkerbe in die nächste weitergeleitet wird.

Nach einer bevorzugten Ausführungsform der Erfindung ist die Blasdüse als längs einer Mantellinie des Filterelementes angebrachte Schlitzdüse ausgebildet. Es wird dann immer augenblicklich eine ganze Falte unter Druck gesetzt und wieder entlastet. Bei der verfügbaren Kompressorleistung ist wegen der relativ grossen Düsenfläche jedoch der Druck und damit der wirkliche Reinigungseffekt begrenzt. Man kann daher auch eine Punktstrahldüse in Richtung der Drehachse hin- und hergehend verfahrbar vorsehen, d.h. auch nach einem vorgegebenen Programm zuschalten lassen.

Wenn auch die Abreinigung im Prinzip vor allem während des Betriebes vornehmlich von innen erfolgen soll, so schliesst dies keineswegs aus, dass wenigstens in Sprühpausen bzw. vor einem Wechselvorgang das Pulver auch von der Aussenseite unmittelbar abgeblasen wird, wie überhaupt eine vollständige Reinigung des Filters innerhalb der Kabine nach den Vorschlägen und den Mitteln erfolgen kann, wie sie für eine gesonderte Reinigungsvorrichtung, die auf eine ältere Priorität zurückgehende DE-A-3 214 255 dargestellt und beschrieben ist. Vor allem könnte dann ohne Filterwechsel eine wenigstens für ähnliche Farben vollständige Abreinigung des Filterelementes etwa in den Betriebspausen oder bei der Nachtschicht automatisch erfolgen.

Im Prinzip muss der Filterträger nur zwei seitliche, um die Filterachse drehbare Halteringe aufweisen, von welchen mindestens einer an eine motorische Antriebsvorrichtung angeschlossen ist. Dies vor allem dann, wenn dem Filterelement direkt eine zylindrische Abstützung zugeordnet ist, die auch begrenzte Torsionskräfte übertragen kann. Normalerweise sind jedoch die Halteringe durch einen das Filterelement innen abstützenden gasdurchlässigen Mantelteil zusammengeschlossen.

Zur Lagerung wenigstens des dem Beschichtungsraum zugewandten Halteringes mit einer an diesem vorgesehenen Stirnwand dient zweckmässigerweise ein zum Beschichtungsraum freitragend vorragender Lagerarm, der vorzugsweise als Druckgaszuleitung für wenigstens eine Abreinigungs-Blasdüse ausgebildet sein kann.

Nach einem anderen Erfindungsvorschlag wird der Filterträger an seiner vom Beschichtungsraum abgewandten Stirnseite in einer zwischen Rohgasraum und Reingasraum eingezogenen Zwischenwand mittels eines Ringlagers fliegend gelagert. Auf diese Weise wird zunächst die ganze Konstruktion vereinfacht, und die Druckluftzuführung, insbesondere der Einsatz einer hin- und hergehend bewegbaren Blasdüse wird erleichtert.

Gerade bei dieser Konstruktion kann es auch angebracht sein, dem Filterträger als Antrieb ein Schrittschaltwerk zuzuordnen, etwa dergestalt, dass am Aussenrand eines mit dem Filterträger verbundenen Ringflansches eine Verzahnung eingeformt ist, in die eine Fortschaltklinke eingreift. Wenn dabei noch der Fortschaltwinkel wenigstens annähernd gleich dem zwischen benachbarten Filterfalten gebildeten Falten-Teilungswinkel ausgebildet ist, dann wird immer voll und schlagartig in die nächste Falte weitergeschaltet.

Weitere Ausbildungen und Vorteile der Erfindung sind in den Unteransprüchen und der folgenden Beschreibung eines Ausführungsbeispieles der Erfindung angegeben. Es zeigen:

Fig. 1 einen Schnitt durch eine erfindungsgemäss ausgebildete Pulversprühkabine,

Fig. 2 eine Vergrösserung des den rechten Teil dieser Kabine bildenden Pulveraggregates,

Fig. 3 einen Teilschnitt nach der Linie III–III mit Leitvorrichtungen für Sekundärgasströmung,

Fig. 4 einen Längsschnitt durch die Kabine nach der Linie IV–IV in Fig. 1,

Fig. 5 eine Ansicht auf zwei aneinandergefügte Kabinen einer Kabinenstrasse von oben gesehen,

Fig. 6 eine der Fig. 1 entsprechende Darstellung mit an der Einsprühseite der Kabine angeordnetem Pulverwagen,

Fig. 7 eine der Fig. 2 entsprechende Darstellung einer abgewandelten Pulversprühkabine,

Fig. 8 einen Teilschnitt durch diese Ausführung nach der Linie VIII–VIII in Fig. 7 und

Fig. 9 die vergrösserte schematische Darstellung eines Klinkenschaltwerkes in Richtung des Pfeiles IX in Fig. 7 gesehen.

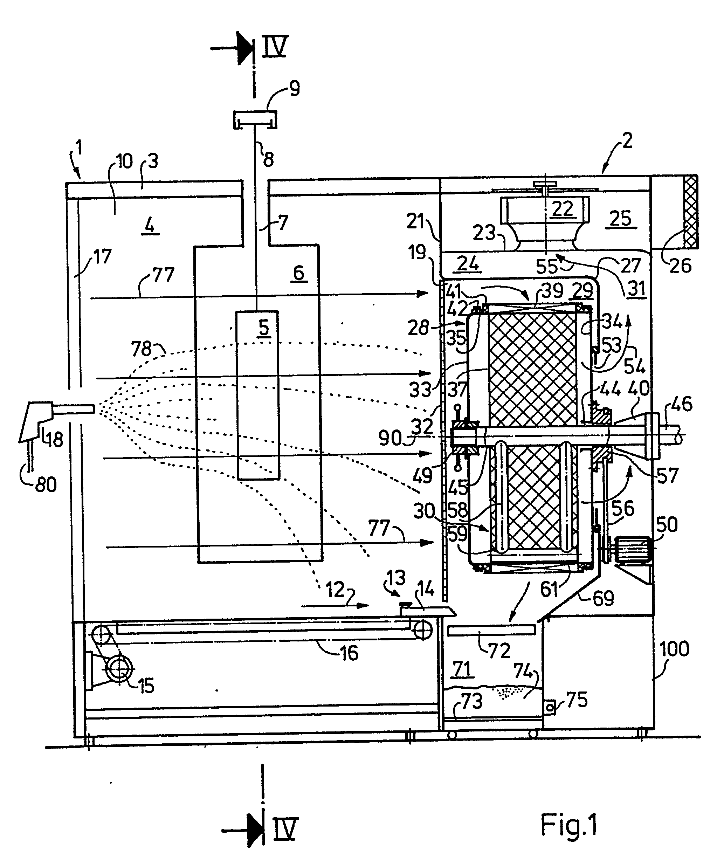

Die in Fig. 1 gezeigte Pulversprühkabine besteht im wesentlichen aus einem quaderförmigen Beschichtungsgehäuse 1 und einer angefügten Pulvereinheit 2. Beide Teile können fest oder lösbar miteinander verbunden sein.

Das Beschichtungsgehäuse 1 weist zwei durch Deckenteile 3 verbundene Stirnwände 10 auf, die zum selbsttätigen Transport von Werkstücken 5 senkrecht zur Zeichenebene mit einer Durchlauföffnung 6 versehen sind, die oben in einen Deckungsschlitz 7 ausläuft, so dass die Werkstücke mittels eines Gehänges 8 an einem Kreisförderer 9 durch den Beschichtungsraum 4 hängend geführt werden können.

Der Kabinenboden 11 ist erhöht angeordnet und mit einer in Richtung des Pfeiles 12 fördernden Schabevorrichtung 13 versehen, deren Schaber 14 durch eine von einem Motor 15 angetriebene Kette 16 hin- und hergehend verfahren wird, bei der Vorwärtsbewegung das auf dem Boden abgelagerte Sprühpulver mitnimmt und bei der Rückwärtsbewegung vom Boden abgehoben wird.

Die Einsprühöffnung 17 für eine Pulversprühpistole 18 erstreckt sich über einen Teilquerschnitt des Beschichtungsraumes 4. Die gegenüberliegende Absaugöffnung 19 ist über die ganze Breite des Behandlungsraumes erstreckt und oben durch einen Vorsprung 21 eingeengt, der ein Sauggebläse 22 auf einer waagerechten Trennwand 23 aufnimmt, die den unteren Saugraum 24 von einem oberen Druckraum 25 trennt. Nach aussen ist der Druckraum durch Filtermatten 26 abgeschlossen, so dass die geförderte Luft wieder in den umgebenden Raum eingeleitet werden kann.

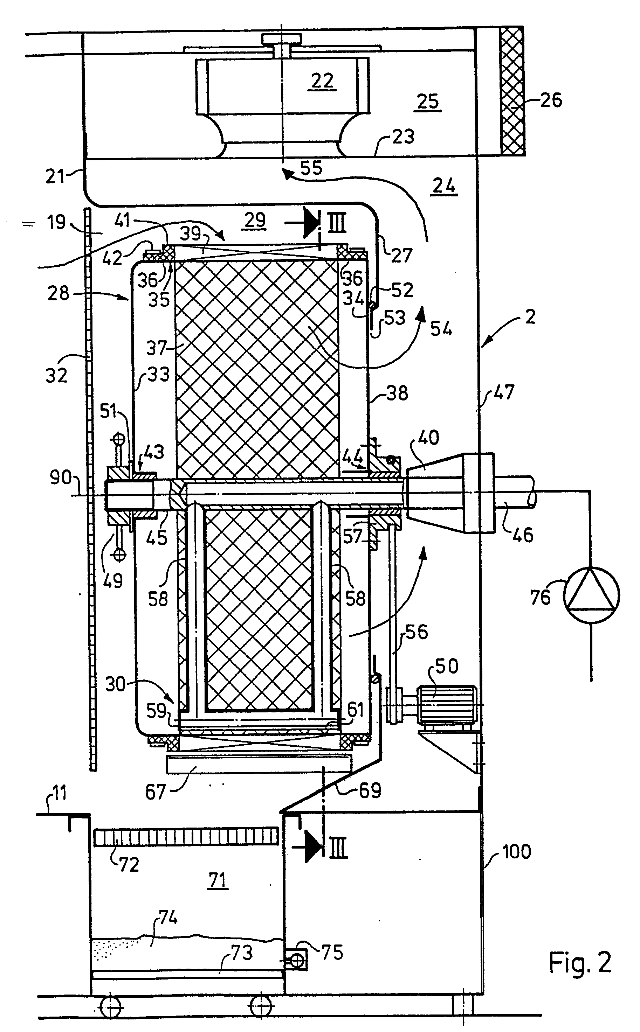

Der Raum unterhalb des Druckraumes 25 ist durch eine wulstförmig ausgeformte Zwischenwand 27 und die an dieser drehbar gelagerte Filtertrommel 28 unterteilt in einen Rohgasraum 29 und einen Reingasraum 31, wie dies am besten aus Fig. 2 zu ersehen ist.

In der Absaugöffnung 19 ist vor dem Rohgasraum 29 etwa in der Höhe der Filtertrommel 28 ein Lochblech 32 oder eine andere gasdurchlässige Abschirmung angebracht, die bewirkt, dass der grössere Teil der auf den Rohgasraum gerichteten Pulverpartikel angehalten wird und dann unmittelbar zu Boden fallen kann, ohne das Filtermaterial zu belasten. Die Öffnungsflächen können dabei von oben nach unten kleiner werden.

Die Filtertrommel 28 besteht im wesentlichen aus den Endscheiben 33, 34 und dem diese verbindenden Trommelmantel 35. Die Endscheibe 33 besteht ebenso wie die beiden äusseren Teile des Trommelmantels 35, die Halteringe 36, aus ganzflächig undurchlässigem Material. Der mittlere Teil 37 des Trommelmantels ist jedoch sieb- bzw. gitterförmig ausgenommen, und im inneren Teil 38 der Endscheibe 34 sind grossflächige Gasdurchtrittsausnehmungen vorgesehen.

Auf dem Trommelmantel ist das Filterelement 39 aufgezogen, das in bekannter Weise als zickzack-förmig gefaltete Filterhülse aus einem Oberflächen-Filterwerkstoff wie Papier oder luftdurchlässige Hartkunststoffbahn gebildet ist. Die beiden Enden der Filterhülse sind in im Querschnitt L-förmigen Stirnringen 41 eingelassen, die über den Halteringen 36 zu liegen kommen und auf diesen durch Spannbänder 42 festspannbar sind. Das Filterelement mit seinen Stirnringen 41 kann daher nach Lösen der Spannbänder 42 bequem von der Trommel abgezogen und wieder auf diese aufgeschoben werden. Zur Erleichterung, können die Spannbänder mit einem Schnellverschluss, etwa einem Exzenter- oder Kniehebel-Spannelement versehen sein.

Das Druckluftrohr 45 ist über eine Druckluftzuführung 46 an ein Druckgebläse 76 angeschlossen, das auf einen Überdruck von 0,1–0,2 bar eingestellt ist. Die Filtertrommel 28 sitzt mittels zweier Lager 43, 44 drehbar auf diesem Druckluftrohr 45, das durch einen Laternenausleger 40 an der Kabinenrückwand 47 eingespannt und Teil einer Abreinigungsvorrichtung 30 ist. Am abgeschlossenen freien Ende 48 des Druckluftrohres 45 ist eine Knebelmutter 49 aufgeschraubt, die mittels einer Ringscheibe 51 die Filtertrommel gegen eine Ringdichtung 52 hält, die etwas ausserhalb einer Öffnung 53 in der Zwischenwand 27 angebracht ist. Die durch das Filterelement 39 und den mittleren Teil 37 des Trommelmantels in die Filtertrommel eingesaugte Luft kann somit gemäss den Pfeilen 54 und 55 durch die im inneren Teil 38 der Endscheibe 34 vorgesehenen Durchbrechungen und die Öffnung 53 hindurch zum Sauggebläse 22 gelangen.

Zum Antrieb der Filtertrommel dient ein Elektromotor 50, der über einen Riemen 56 eine Flanschscheibe 57 antreibt, die mit dem inneren Teil der Endscheibe 34 verschraubt ist und deren Lager 44 trägt.

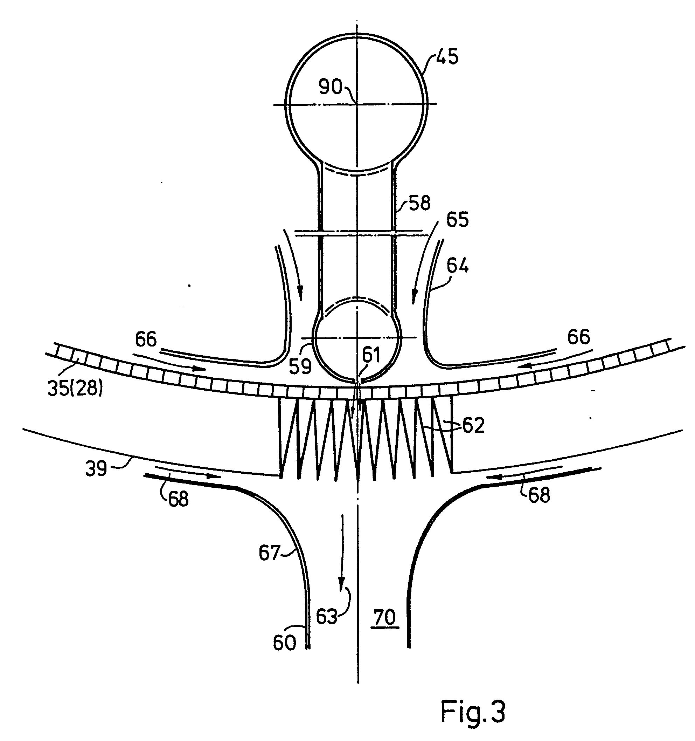

Mit dem feststehenden Druckluftrohr 45 ist über zwei Speichenrohre 58 ein an beiden Enden abgeschlossenes Düsenrohr 59 verbunden, das, wie am besten aus Fig. 3 zu ersehen ist, an der unteren Mantellinie dicht innen am Trommelmantel einen engen Düsenschlitz 61 aufweist, durch den ständig oder intermittierend in lotrechter Axialebene ein scharfer Blasstrahl gegen das Filterelement 39 geführt wird, wobei der Strahl in aller Regel nur in eine der verschiedenen Falten 62 des Filterelementes gelangt. Diese Falten sind der besseren Erläuterung wegen in Fig. 3 mit grösserem Neigungswinkel ausgeführt, in der Regel haben sie nur wenige Millimeter Umfangsabstand, so dass sich auf einer einzigen Filterhülse eine Filterfläche unterbringen lässt, die bis zu zwanzigmal grösser ist als ihre Mantelfläche. Bei einigermassen gründlicher Abreinigung genügen bereits 50 m² Filterfläche zum Rückgewinnen des nicht am Werkstück niedergeschlagenen Restpulvers einer Sprühkabine bzw. einer Sprühstation einer Beschichtungsstrasse.

Ob nun durch die intermittierende Druckluftsteuerung oder durch die kontinuierliche Drehung der Filtertrommel, stets wird jede Filterfalte augenblicklich einem gegen die normale Saugrichtung wirkenden Druckstoss unterworfen, durch den sich die Filterwandung soweit ausformt, dass haftengebliebene Pulverpartikel abgesprengt werden und dann gemäss Pfeil 63 herabfallen.

Zur Verstärkung des Aufweitschlages dienen seitlich neben dem Düsenrohr 59 angebrachte winkelförmige Leitbleche 64, die einmal gemäss den Pfeilen 65 einen Sekundärluftstrom radial und gemäss den Pfeilen 66 weitere Sekundärströmungen in Umfangsrichtung heranführen.

Auch ausserhalb der Filterhülse sind winkelförmige Leitbleche 67 vorgesehen, die injektorartig erzeugte Sekundärluftströmungen gemäss den Pfeilen 68 zur Mitte führen, die Ablösung der Pulverpartikel begünstigen und diese zur unteren Mantellinie hin mitnehmen. Besondere Bedeutung kommt dabei dem durch die unteren Schenkel 60 der Leitbleche 67 gebildeten Schacht 70 zu, der auch stirnseitig abgeschlossen sein kann und dadurch nach Art eines Kamines die Blasströmung soweit zusammenhält und gegenüber der ausserhalb des Schachtes wirkenden überlagerten Ansaugströmung des Sauggebläses 22 abschirmt, damit die abgelösten Pulverpartikel zuverlässig nach unten weggeleitet werden, ohne der Wirkung des überlagerten Ansaugstromes wieder ausgesetzt und evtl. zum Filter zurückgeführt zu werden.

Anstelle einer Schlitzdüse 61 kann auch eine in Axialrichtung bewegte Lochdüse kleineren Querschnitts vorgesehen sein, so dass man höheren Druck auf kleinerer Fläche einwirken lassen kann. Eine solche Lochdüse kann zusätzlich zur Schlitzdüse unter einem Umfangswinkel versetzt vorgesehen sein, und sie kann wechselweise oder auch gleichzeitig mit der Schlitzdüse eingeschaltet werden. Ebenso lässt sich ggf. auf der Aussenseite der Filterhülse unmittelbar eine Blasdüse einsetzen, die das hier durch die Sekundärströmung gemäss den Pfeilen 68 bewirkte Ablösen der Pulverpartikel in einem ausgeprägten Fegevorgang intensiviert. Auf diese Weise ist im Prinzip eine vollständige Abreinigung von Oberflächenfiltermaterial möglich, so dass unmittelbar, ggf. also auch ohne zwischenzeitiges Ausbauen des Filters, ein erneuter Einsatz für andere Farben möglich ist. Um die Druckverhältnisse im Beschichtungsraum nicht zu beeinflussen, können auch einzelne Abreinigungsvorgänge, etwa das Abfegen von aussen, steuerungsmässig mit dem Betrieb der Sprühvorrichtung wechselseitig gekuppelt und willkürlich oder nach vorgegebenem Programm durchgeführt werden.

Das untere Ende der Zwischenwand 27 geht zunächst in einen Schrägboden 69 über, zwischen welchem und dem Kabinenboden 11 ein Pulverwagen 71 angeordnet ist, der in bekannter Weise mit einer motorisch betriebenen Siebmaschine 72 und einem Luftboden 73 zur Auflockerung des aufbereiteten Pulvers 74 vor der Weiterförderung durch einen Injektor 75 zur Pulversprühpistole 18 hin versehen ist und durch eine Öffnung 100 aus dem Kabinengehäuse heraus verfahren werden kann. Wie vor allem aus Fig. 1 zu ersehen, ist der Förderweg verhältnismässig lang.

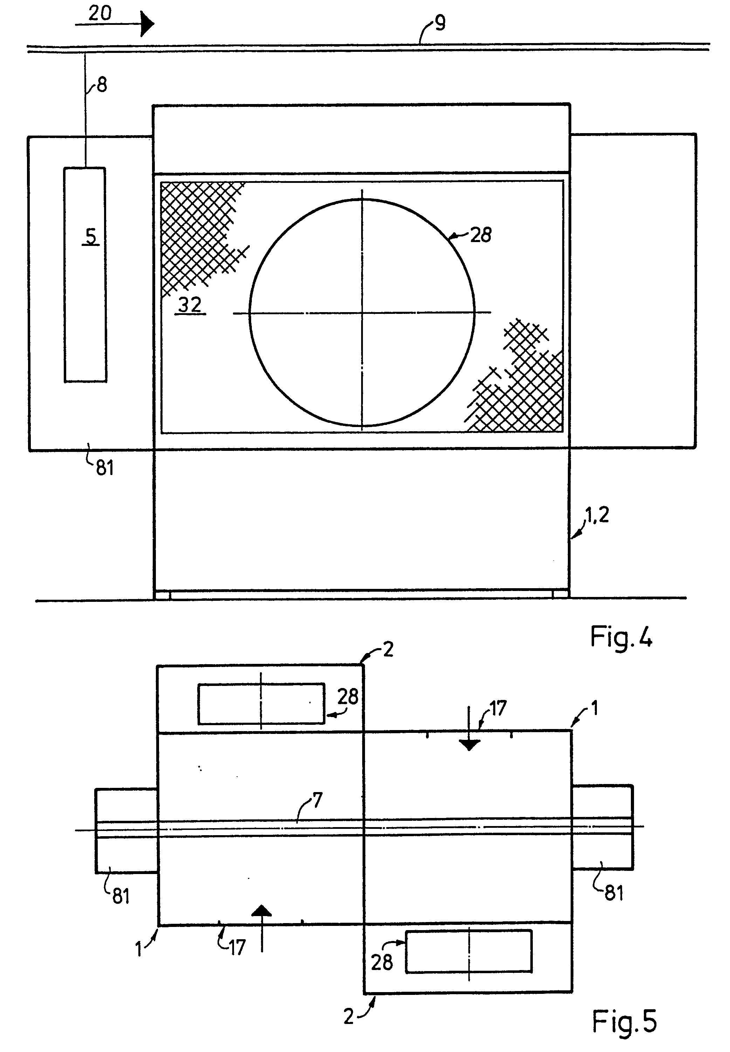

Im Betrieb werden die Werkstücke 5 durch den Kreisförderer 9 in Richtung des Pfeiles 20 in Fig. 4 mit gleichmässiger Geschwindigkeit gefördert und durch die Pulversprühpistole 18 besprüht, während der Saugstrom aus dem Rohgasraum 29 Luft aus der Einsprühöffnung 17 etwa entsprechend den parallel eingezeichneten Strömungslinien 77 ansaugt. Dabei wird nach der jeweils eingestellten Zerstäubungsform das Sprühpulver wenigstens annähernd entsprechend den mit unterbrochenen Linien dargestellten Flugbahnen 78 versprüht. Es ist erkennbar, dass die Pulverpartikel bis über das Werkstück hinaus ihre Flugbahn weitgehend beibehalten, im Mittel sich also waagerecht bis hinter das Werkstück bewegen und, soweit sie nicht zum Werkstück durch elektrostatische Kräfte zurückgezogen werden, bis zur Ansaugöffnung 19 gelangen. Dort werden sie zum weitaus überwiegenden Teil von dem Lochblech 32 angehalten, fallen herab und werden mit dem am Kabinenboden 11 angesammelten Pulver durch den Schaber 14 der Siebmaschine 72 zugeführt. Auch die Pulverpartikel, die in der Mitte der Filtertrommel 28 durch das Lochblech 32 hindurchgelangen, stossen an die Endscheibe 33 der rotierenden Trommel, ohne dass sie an dieser haften bleiben können, sie werden also abgeschleudert und fallen direkt auf die Siebmaschine 72.

Damit bleibt ein sehr geringer Rest des nicht am Werkstück haftenden Pulvers, das noch in den Umfangsbereich der Filterhülse 39 gelangt und dort durch nach innen wirkende Saugkraft festgehalten wird. Dieser Teil muss durch die Abreinigungsvorrichtung 30 während des laufenden Betriebes, in Sprühpausen oder gar beim Schichtwechsel irgendwie abgelöst werden, wobei der in einer Axialebene nach unten gerichteten Blasdüse wesentliche Bedeutung zukommt. Auf diese Weise erfolgt die Ablösung vornehmlich an der unteren Mantellinie der Filterhülse, so dass das abgelöste Pulver wiederum teils direkt, teils über den Schrägboden 69 auf die Siebmaschine 72 gelangt. Das auf diese Weise gesiebte und aufbereitete Pulver wird nach Auflockerung durch den Luftboden 73 mittels des Injektors 75 durch den Schlauch 80 der Pulversprühpistole 18 zugeführt.

Fig. 4 lässt erkennen, dass der Durchmesser der Filtertrommel 28 nicht nur der verfügbaren Höhe angenähert, sondern auch grösser ist als die halbe Breite der Pulverkabine, an die dort zwei seitliche Tunnelansätze 81 angefügt sind.

Nach Fig. 5 sind Pulvereinheiten 2 auf entgegengesetzten Seiten zweier unmittelbar aneinandergefügter Beschichtungsgehäuse 1 und jeweils gegenüberliegend der zugehörigen Einsprühöffnung 17 angeordnet. Es können auch die Anschlussflächen des Beschichtungsgehäuses so gestaltet sein, dass man wahlweise auf der einen oder anderen Seite einsprüht oder absaugt.

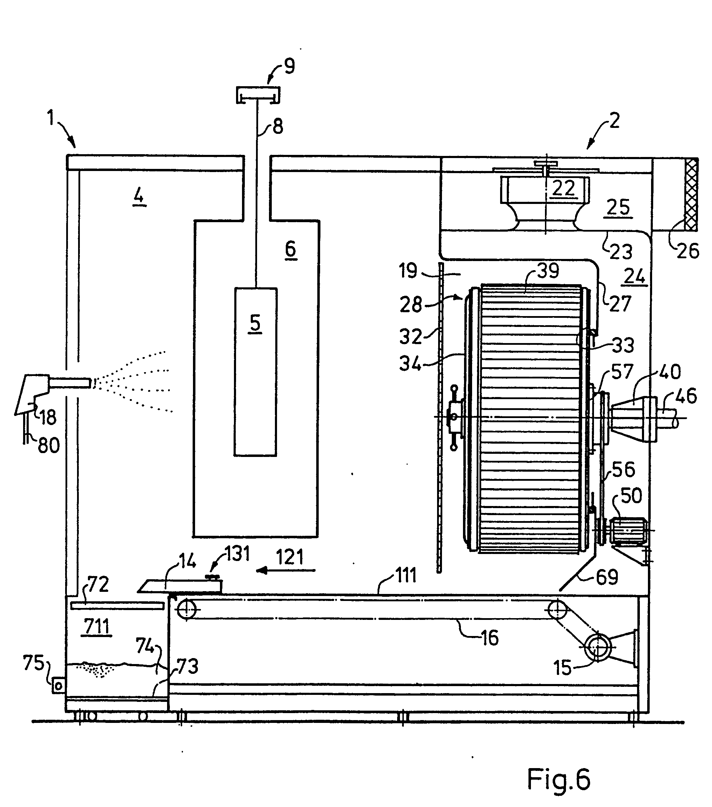

Nach Fig. 6, die im übrigen weitgehend Fig. 1 entspricht, ist daher der Pulverwagen 711 am Vorderende der Kabine dicht unter der Einsprühöffnung 17 angeordnet, und der Kabinenboden 111 ist mit der Schabevorrichtung 131 bis zum Schrägboden 69 unter der Filtertrommel erstreckt. Es wird also alles gewonnene Sprühpulver gemäss Pfeil 121 von der Filtertrommel weg über den Kabinenboden mechanisch bis zum dicht an der Einsprühöffnung 17 angeordneten Pulverwagen 711 gefördert. Der Abstand zwischen dem Injektor 75 und der Pulversprühpistole 18 wird dadurch etwa halbiert. Von der dem Injektor 75 zugeführten Druckenergie bleibt demnach der grösste Teil noch an der Pulversprühpistole 18 verfügbar, so dass die Zerstäubung des Sprühpulvers wesentlich exakter und gleichmässiger vorgenommen werden kann als bei der entfernten Anordnung des Pulverbehälters nach Fig. 1. Anstelle der Schabevorrichtung 131 kann man auch einen Bandförderer, einen Schwingförderer oder einen Vibrationsförderer einsetzen. Im Prinzip ist sogar eine Förderung ausschliesslich mit entsprechender Neigung des Kabinenbodens möglich.

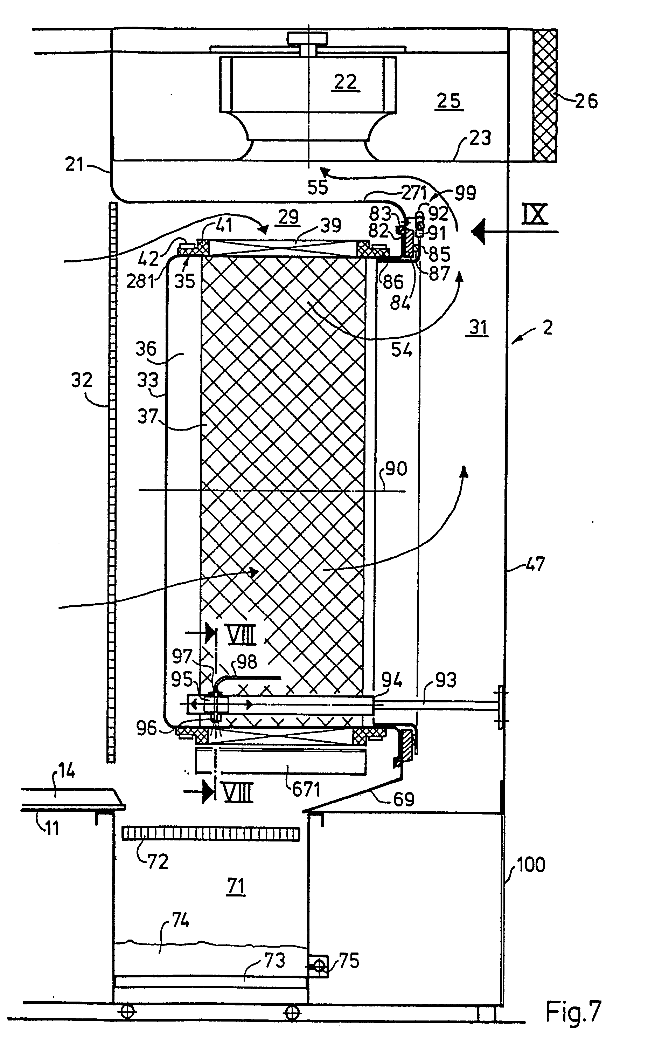

Bei der in den Fig. 7 bis 9 gezeigten Filtereinheit sind für gleiche und gleichartige Teile zur erstbeschriebenen Ausführung gleiche bzw. gleichartige Bezugszeichen eingesetzt. So ist die Filtertrommel 281 mit ihrem rechten Ende in Fig. 7 unmittelbar an der Zwischenwand 271 gelagert. Sie besitzt zu diesem Zweck einen nach aussen abgebogenen Lagerflansch 82, der sich mit einer Ringdichtung 83 an den Innenflansch der Zwischenwand 271 anlegt. Dieser Innenflansch ist durch einen gesonderten, aussen aufgesetzten massiven Lagerring 84 verstärkt, und dieser Lagerring wird hinterfasst vom ebenen Flansch 85 eines Winkelringes 86, der entweder fest oder in Richtung der Drehachse 90 federnd nachgiebig vorgespannt an der Filtertrommel 281 gehalten ist. Diese Vorspannung kann beim festen Anbringen des Winkelringes 86 auch durch Zwischenschalten eines federnd nachgiebigen Ringteiles 87 erfolgen, etwa eine Art Schwingmetall.

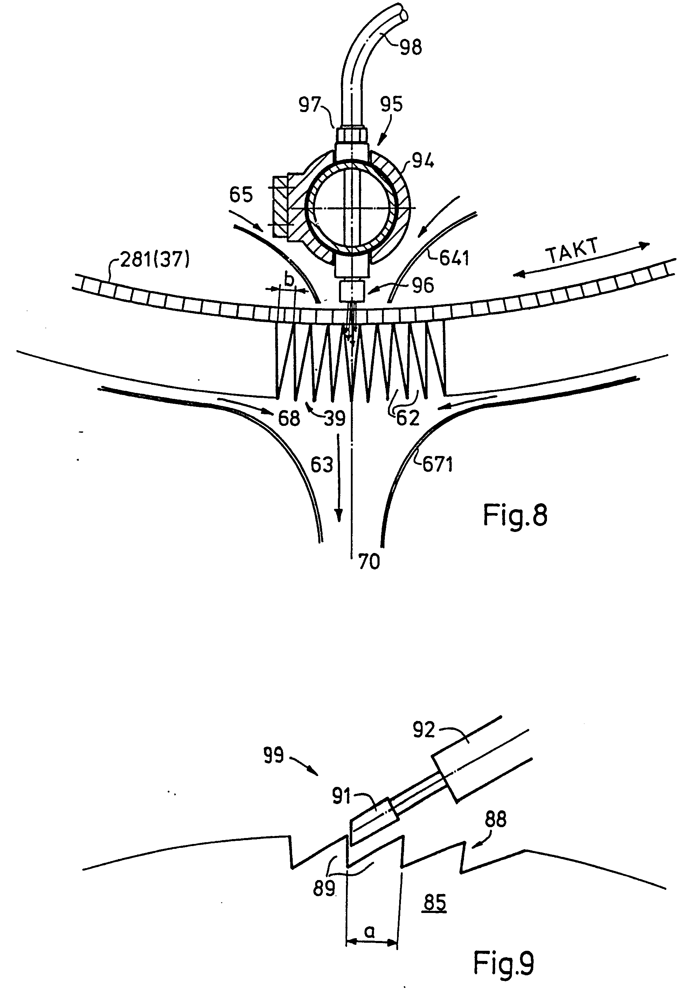

Der Rand des Flansches 85 ist, wie am besten aus Fig. 9 ersichtlich, mit einer Sägeverzahnung 88 versehen, an deren Zähnen 89 eine hin- und herbewegbare Antriebsklinke, hier der Stössel 91, eines kleinen Druckluftzylinders 92 eingreift und durch jeden Hub die Filtertrommel um den Teilungswinkel zwischen zwei Zähnen 89 weiterschaltet.

Das hier von der Kabinenrückwand 47 ausgehende Trägerrohr 93 trägt einen doppelt wirkenden Druckluftzylinder 94, in dem in bekannter und daher nicht weiter geschilderter Weise ein als fliegender Kolben ausgebildeter Blaskopf 95 geführt ist, der, über Schlitzabdeckungen nach aussen geführt, unten eine Punktstrahldüse 96 und oben einen Druckluftanschluss 97 trägt, der über einen Schlauch 98 mit der nicht gezeigten Überdruckquelle verbunden ist, die einen hohen Blasdruck von 2 bis 8 bar, insbesondere 6 bar liefert.

Der Antrieb des Blaskopfes 95 kann mittels der durch diesen Schlauch zugeführten Druckluft oder aber durch gesonderte Druckluftanschlüsse am Zylinder 94 bewerkstelligt werden. Es muss allerdings gewährleistet sein, dass ein Hubvorgang mit möglichst gleichmässigem Zeittakt in der Grössenordnung von einer oder wenigen Sekunden erreicht wird. Anstelle der gezeigten Kolbenanordnung kann auch beispielsweise eine Spindel- oder Zahnstangenführung für einen Blaskopf vorgesehen sein.

Mit der Richtungsumkehr am Hubende des Blaskopfes 95 erhält gleichzeitig der Druckluftzylinder 92 für das Klinkenschaltwerk 99 einen kurzen Einschaltimpuls. Die Zahnteilung a der Sägeverzahnung 88 ist weitgehend abgestimmt auf die Faltenteilung b der Filterfalten 62. Durch die Weiterschaltung der Filtertrommel 281 wird somit jeweils eine neue Filterfalte 62 vor die Punktstrahldüse 96 des entlang einer konstanten Mantellinie hin- und hergehend bewegten Blaskopfes 95 geschwenkt. Die Blasdüse fährt in der einen Falte vor, in der nächsten zurück. Durch den höheren Druck ist die örtliche Verformung der Filterwandung kurzzeitig wesentlich grösser als bei der zuvor beschriebenen Schlitzdüse. Daher ist auch der Abreinigungseffekt verbessert.

Die Leitbleche 641 und 671 sind hier zwar etwas anders ausgebildet, dienen aber grundsätzlich dem gleichen Zweck wie die in Figur 3 gezeigten Leitflächen. Auf die zugehörige Erläuterung wird verwiesen.

**Patentansprüche**

1. Pulversprühkabine zum Beschichten der Oberfläche von in einem Beschichtungsraum (4) befindlichen Werkstücken (5), mit wenigstens einer Einsprühöffnung (17) und einer sich an eine Begrenzungsfläche des Beschichtungsraumes anfügenden Filtervorrichtung (28, 39) mit einem zentrisch zu einer Drehachse (90) angeordneten Filterträger (28) für ein auswechselbar an dessen gasdurchlässigem Mantelteil (35) anzubringendes Filterelement (39), mit einer Abreinigungsvorrichtung (30), die eine gegen die Haupt-Saugrichtung auf die Wandung des Filterelements gerichtete Abreinigungsblasdüse (59, 61) aufweist, und mit einer Antriebsvorrichtung (50, 56) für einen Relativ-Drehantrieb von Abreinigungsdüse (59, 61) und Filterträger (28) um dessen Achse, wobei der Filterträger von einer Öffnung in einer rückseitigen Trennwand (27) abdichtend zum Beschichtungsraum (4) hin frei vorragt und auf seinem gasdurchlässigen Mantel (35) zwischen gasundurchlässigen Endteilen (33, 38) das Filterelement (39) mittels zweier Stirnelemente (41) abdichtend und in den Beschichtungsraum (4) hinein abziehbar angeordnet ist, dadurch gekennzeichnet, dass der Filterträger (28) um die etwa zur Mitte des Beschichtungsraumes (4) hin gerichtete Achse (90) drehbar gelagert, die Abreinigungsvorrichtung (30) an der unteren Mantellinie des Filterelementes (39) angeordnet und die Blasdüse (59, 61) nach unten gerichtet ist und ihr wenigstens innerhalb des Filterelementes (39) angebrachte Leitbleche (64, 67) zum injektorartigen Erzeugen einer Sekundärströmung zugeordnet sind.

2. Pulversprühkabine nach Anspruch 1, gekennzeichnet durch ausserhalb des Filterelementes (39) mindestens auf zwei Längsseiten der Blasstrahlebene (61–63) angebrachte Leitbleche (67) zur Führung der abgelösten Pulverpartikel aus dem Ansaugbereich des Filterelementes heraus.

3. Pulversprühkabine nach Anspruch 1 oder 2, dadurch gekennzeichnet, dass die Blasdüse als längs einer Mantellinie des Filterelementes (39) angebrachte Schlitzdüse (61) ausgebildet ist.

4. Pulversprühkabine nach einem der Ansprüche 1 bis 3, dadurch gekennzeichnet, dass eine Punktstrahldüse (96) in Richtung der Filter-Drehachse (90) hin- und hergehend verfahrbar vorgesehen ist.

5. Pulversprühkabine nach Anspruch 3 oder 4, dadurch gekennzeichnet, dass Schlitzdüse (61) und Punktstrahldüse (96) wahlweise zuschaltbar vorgesehen sind.

6. Pulversprühkabine nach Anspruch 4 oder 5, dadurch gekennzeichnet, dass zur Lagerung wenigstens eines dem Beschichtungsraum (4) zugewandten Halteringes (36) des Filterträgers (28) mit einer an diesem vorgesehenen Stirnwand (33) ein zum Beschichtungsraum (4) hin freitragend vorragender Lagerarm (45) dient.

7. Pulversprühkabine nach Anspruch 6, dadurch gekennzeichnet, dass der Lager (45) als Druckgaszuleitung für wenigstens eine Abreinigungs-Blasdüse (61) ausgebildet ist.

8. Pulversprühkabine nach einem der Ansprüche 1 bis 7, dadurch gekennzeichnet, dass der Filterträger (281) in einer den Rohgasraum (29) vom Reingasraum (31) trennenden Wand (27) mittels eines Ringlagers (82–87) fliegend gelagert ist.

9. Pulversprühkabine nach einem der Ansprüche 1 bis 8, dadurch gekennzeichnet, dass dem Filterträger (281) als Antrieb ein Schrittschaltwerk (89–92) zugeordnet ist. (Fig. 7, 9).

10. Pulversprühkabine nach Anspruch 8 und 9, dadurch gekennzeichnet, dass am Aussenrand eines mit dem Filterträger (281) verbundenen Ringflansches (85) eine Verzahnung (88) eingeformt ist, in die eine Fortschaltklinke (91) eingreift.

11. Pulversprühkabine nach Anspruch 10 für Faltfilter, dadurch gekennzeichnet, dass der Fortschaltwinkel (a) wenigstens annähernd gleich dem zwischen benachbarten Filterfalten (62) gebildeten Falten-Teilungswinkel (b) ausgebildet ist.

12. Pulversprühkabine nach Anspruch 1, dadurch gekennzeichnet, dass die ringförmigen Stirnelemente (41) für das insbesondere als zickzack-förmig gefaltete Filterhülse ausgebildete Filterelement (39) aus einem begrenzt elastisch verformbaren Kunststoff bestehen.

13. Pulversprühkabine nach Anspruch 12, dadurch gekennzeichnet, dass die Stirnringe (41) aus einem begrenzt elastisch verformbaren Kunststoff bestehen.

14. Pulversprühkabine nach Anspruch 13, gekennzeichnet durch den einzelnen Stirnringen (41) zugeordnete und diese umschliessende ringförmige Spannelemente, insbesondere Ringspannbänder (42).

## Claims

1. Powder spray cabin for coating the surface of workpieces (5) situated in a coating chamber (4), the cabin having at least one inlet aperture (17) and a filter device (28, 39), which is attached to a boundary face of the coating chamber and has a filter carrier (28), disposed centrally relative to an axis of rotation (90), for a filter element (39) which is to be interchangeably mounted on the gas-permeable cover portion (35) of the filter carrier, a discharge means (30) which has a discharge blast nozzle (59, 61) directed towards the wall of the filter element in opposition to the main suction direction, and a drive means (50, 56) for driving the discharge nozzle (59, 61) and filter carrier (28) rotatably relative to one another about the axis of the filter carrier, the filter carrier protruding freely from an aperture in a dividing wall (27) at the rear end towards the coating chamber (4) in a sealing manner, and the filter element (39) is disposed on the gas-permeable cover (35) of the carrier between gas-impermeable end portions (33, 38) so as to serve as a seal by means of two front elements (41) and so as to be removable in the direction of the coating chamber (4), characterised in that the filter carrier (28) is rotatably mounted about the axis (90) extending substantially towards the centre of the coating chamber (4), the discharge means (30) is disposed on the lower generatrix of the filter element (39), and the blast nozzle (59, 61) is downwardly orientated and has baffle plates (64, 67) associated therewith, which are provided at least inside of the filter element (39) for the injector-like production of a secondary stream.

2. Powder spray cabin according to claim 1, characterised by baffle plates (67), which are provided outside of the filter element (39) on at least two longitudinal sides of the blast jet plane (61–63), for the guidance of the released powder particles from the suction region of the filter element.

3. Powder spray cabin according to claim 1 or 2, characterised in that the blast nozzle is in the form of a slotted nozzle (61) which is provided longitudinally of a generatrix of the filter element (39).

4. Powder spray cabin according to one of claims 1 to 3, characterised in that a point jet nozzle (96) is provided so as to be displaceable backwardly and forwardly in the direction of the axis of rotation (90) of the filter.

5. Powder spray cabin according to claim 3 or 4, characterised in that slotted nozzle (61) and point jet nozzle (96) are provided so as to be selectively connectable.

6. Powder spray cabin according to claim 4 or 5, characterised in that a supporting arm (45), which protrudes in a cantilever manner towards the coating chamber (4), serves to support at least one retaining ring (36) of the filter carrier (28) with a front wall (33) provided on the filter carrier, the retaining ring facing the coating chamber (4).

7. Powder spray cabin according to claim 6, characterised in that the support (45) is in the form of a pressure gas supply line for at least one discharge blast nozzle (61).

8. Powder spray cabin according to one of claims 1 to 7, characterised in that the filter carrier (281) is mounted in an overhung manner in a wall (27), separating the unfiltered gas chamber (29) from the filtered gas chamber (31), by means of an annular collar (82–87).

9. Powder spray cabin according to one of claims 1 to 8, characterised in that the filter carrier (281) has a step-by-step switching mechanism (89–92) associated therewith as a drive means (Figs. 7, 9).

10. Powder spray cabin according to claims 8 and 9, characterised in that a toothing (88) is provided on the outer edge of an annular flange (85), which is connected to the filter carrier (281), and a continuous switching pawl (91) meshes with the toothing.

11. Powder spray cabin according to claim 10 for pleated filters, characterised in that the continuous switching angle (a) is adapted to be at least approximately equal to the pleat separation angle (b) formed between adjacent filter pleats (62).

12. Powder spray cabin according to claim 1, characterised in that the annular front elements (41) for the filter element (39), which is especially in the form of a zig-zag pleated filter sleeve, are formed from a plastics material which is resiliently deformable to a limited extent.

13. Powder spray cabin according to claim 12, characterised in that the front rings (41) are formed from a plastics material which is resiliently deformable to a limited extent.

14. Powder spray cabin according to claim 13, characterised by annular tensioning elements, especially annular tensioning bands (42), which are associated with the individual front rings (41) and surround same.

**Revendications**

1. Cabine de projection de poudre pour revêtir la surface de pièces (5) placées dans une chambre de pulvérisation (4), comportant au moins une ouverture de pulvérisation (17) et un dispositif de filtration (28, 29) adjacent à une paroi de la chambre de pulvérisation et pourvu d'un porte-filtre (28) centré par rapport à un axe de rotation (90) pour porter un élément filtrant (39) appliqué de manière amovible sur le pourtour (35) perméable aux gaz du porte-filtre, ainsi que d'un dispositif de nettoyage (30) qui comporte une buse de soufflage (59, 61) dirigée contre la surface de l'élément filtrant dans le sens contraire à l'aspiration principale, et d'un dispositif d'entraînement (50, 56) pour produire une rotation relative de la buse de nettoyage (59, 61) et du porte-filtre (28) autour dudit axe, le porte-filtre étant placé devant une ouverture d'une cloison arrière (27), du côté de la chambre de pulvérisation (4) par rapport à celle-ci, et raccordé d'une manière étanche à cette ouverture, et l'élément filtrant (39) étant monté, sur ledit pourtour perméable aux gaz (35) entre des parties frontales étanches (33, 38) du porte-filtre, au moyen de deux éléments frontaux (41) assurant l'étanchéité et permettant de retirer l'élément filtrant en direction de la chambre de pulvérisation (4), caractérisée en ce que le porte-filtre (28) est monté de manière à tourner autour dudit axe (90), lequel est orienté approximativement vers le milieu de la chambre de pulvérisation (4), en ce que le dispositif de nettoyage (30) est disposé en face de la génératrice inférieure de l'élément filtrant (39), sa buse de soufflage (59, 61) étant dirigée vers le bas, et est associé à des tôles directrices (64, 67) disposées au moins en dedans de l'élément filtrant (39) pour produire un flux secondaire à la manière d'un injecteur.

2. Cabine selon la revendication 1, caractérisée par des tôles directrices (67) disposées en dehors de l'élément filtrant (39) au moins sur deux côtés longitudinaux du plan du jet de soufflage (61–63) pour guider hors de la zone d'aspiration de l'élément filtrant les particules de poudre qui se détachent.

3. Cabine selon la revendication 1 ou 2, caractérisée en ce que la buse de soufflage est constituée par une buse à fente (61) disposée le long d'une génératrice de l'élément filtrant (39).

4. Cabine selon l'une des revendications 1 à 3, caractérisée en ce qu'une buse à jet ponctuel (96) est montée de manière mobile en va-et-vient dans la direction de l'axe (90) de rotation du filtre.

5. Cabine selon la revendication 3 ou 4, caractérisée en ce qu'une buse à fente (61) et une buse à jet ponctuel (96) sont prévues pour être branchées à choix.

6. Cabine selon la revendication 4 ou 5, caractérisée en ce qu'un bras de support (45) monté en porte-à-faux en direction de la chambre de pulvérisation (4) sert de pivot pour au moins un anneau porteur (36) prévu dans le porte-filtre (28) du côté de ladite chambre (4), avec un flasque frontal (33) prévu contre cet anneau.

7. Cabine selon la revendication 6, caractérisée en ce que le bras de support (45) constitue une conduite d'alimentation en gaz sous pression pour au moins une buse de soufflage (61) pour le nettoyage.

8. Cabine selon l'une des revendications 1 à 7, caractérisée en ce que le porte-filtre (281) est monté en porte-à-faux, au moyen d'un palier annulaire (82–87), dans une cloison (27) séparant la zone des gaz non filtrés (29) de la zone des gaz filtrés (31).

9. Cabine selon l'une des revendications 1 à 8, caractérisée en ce que le porte-filtre (281) est équipé d'un mécanisme d'entraînement pas à pas (89–92; fig. 7, 9).

10. Cabine selon les revendications 8 et 9, caractérisée en ce que le bord extérieur d'une collerette annulaire (85) liée au porte-filtre (281) est pourvu d'une denture (88) dans laquelle s'engage un cliquet d'avancement (91).

11. Cabine selon la revendication 10, pour filtre plissé, caractérisée en ce que l'angle du pas d'avancement (a) est au moins approximativement égal à l'angle unitaire (b) défini par les plis successifs (62) du filtre.

12. Cabine selon la revendication 1, caractérisée en ce que les éléments frontaux annulaires (41) prévus pour l'élément filtrant (39), constitué en particulier par une chemise filtrante pliée en zigzag, sont faits d'une matière synthétique à déformabilité élastique limitée.

13. Cabine selon la revendication 12, caractérisée en ce que les bagues frontales (41) sont faites d'une matière synthétique à déformabilité élastique limitée.

14. Cabine selon la revendication 13, caractérisée par des éléments annulaires de serrage, notamment des colliers à ruban (42), qui sont associés aux bagues frontales respectives (41) et qui les entourent.

Fig.1

Fig. 2

Fig.3

Fig.4

Fig.5

Fig.6

Fig.7

Fig.8

Fig.9